Europäisches Patentamt

European Patent Office

Office européen des brevets

(11) Publication number: **0 221 192**
**B1**

# EUROPEAN PATENT SPECIFICATION

(45) Date of publication of patent specification: **06.12.89**

(21) Application number: **85111951.1**

(22) Date of filing: **20.09.85**

(51) Int. Cl.⁴: **A 23 L 1/325,** A 23 L 1/04, A 23 J 3/00

(54) **Simulated lobster meat and process for preparing same.**

(43) Date of publication of application:
**13.05.87 Bulletin 87/20**

(45) Publication of the grant of the patent:
**06.12.89 Bulletin 89/49**

(84) Designated Contracting States:
**AT BE IT NL SE**

(56) References cited:
EP-A-0 159 038
US-A-4 362 752

JAPIO DATA BASE: JP 84 146 560 (KOBATA TOSHISADA)

(73) Proprietor: **Sugiyo Co., Ltd.**
**27, Ingai Fuchu-machi Nanao**
**Ishikawa (JP)**

(72) Inventor: **Sugino, Yoshito**
**39, Sakujimachi**
**Nanao Ishikawa (JP)**
Inventor: **Yamamoto, Iwao**
**2-5, Nagasou 20-gou Shouwacho, 2-chome**
**Tsuruga Fukui (JP)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

This invention relates to a process for preparing an edible product of fish meat paste simulating the meat of macrura in both taste and texture. More particularly, this invention relates to a process for preparing an edible product of fish meat paste which gives a particular oral sensation or resistance to mastication as if the real meat of relatively large-sized species of macrura such as lobsters and spring lobsters were eaten.

Many people like the meat of macrura since it contains little fat and has not only a light flavor but also a superior texture which gives a particular oral sensation or a kind of crispness combined with elasticity when the meat is bitten. In recent years, however, the supply cannot meet the demand, and macrura such as lobster has become a rather expensive seafood.

In the fish meat paste product industry various attempts have been made to develop substitutes for the real meat of macrura.

The known substitutes, however, comprise nothing more than fish meat paste mixed with the real meat of macrura or seasoned with an essence extracted from real macrura so that they have merely a taste or flavor similar to that of real macrura meat and cannot satisfy the consumers with respect to the oral sensation experienced upon eating them.

From US—A—4,362,752 an edible, string-like product simulating the meat of macrura such as lobster is known which contains fish meat paste and a fibrous material made of a modified mannan gel. This fibrous material has a three-dimensional reticulate structure and is intended to imitate the muscular fibres of macrura. These fibers have a diameter of less than 1.5 mm, especially less than 1 mm. The fibrous material may be modified by heating or dehydration.

In the field of marine product industry studies and experiments are believed to be being conducted, but to the best knowledge of the present inventors, except US—A—4,362,752 there have been no technical reports or literature on the method of giving to the product of fish meat paste not only taste and flavor similar to those of lobster but also the particular oral sensation experienced upon eating lobster.

The reason why there have been very few proposals to meet the demand for products of fish meat paste having taste and texture similar to those of lobster is believed to be because real meat of macrura such as lobster comprises a plurality of muscle fibers closely intertwined so that it is extremely difficult to make such closely intertwined muscle fibers from any other food material than lobster.

It is the object of the present invention to provide a process for preparing an edible product simulating the meat of macrura such as lobster which gives an improved oral sensation when it is bitten as compared to the product known from US—A—4,362,752.

This object is achieved by a process for preparing an edible product simulating the meat of macrura such as lobster, characterized by the following steps:

a) preparing a predetermined amount of fish meat paste made by preparing "surimi" of fish meat, and mixing said "surimi" with at least one additive selected from salt, seasoning agents, starch and texturing agents;

b) preparing a predetermined amount of flakes of mannan gel which has been modified by freezing and defrosting so as to have a reduced hydrophilicity, said flakes being less than 3 mm in thickness;

c) mixing 1 (one) part by weight of said fish meat paste and 0.2 to 2 parts by weight of said flakes;

d) kneading said mixture of fish meat paste and flakes; and

e) coagulating said kneaded mixture by applying heat thereto.

## Description of preferred embodiments

The Japanese word "surimi" means a fish meat paste which is obtained in the following manner: The guts are removed from a fish, which is then crushed or squeezed so that the somewhat mashed meat is separated from the skin, head, bones, and other components of the fish. The separated mass of meat is then rinsed in water so that water-soluble proteins are removed from the meat. The fish meat paste thus obtained is "surimi".

The modified mannan gel is made in the following manner: Powder of water-soluble mannan such as galactomannan is dissolved in water at about 40°C. The amount of the mannan powder to be added is 0.5% to 20% of water. If the amount is less than 0.5%, the frozen gel releases too much water when it is defrosted, so that the yield decreases as compared with the amount of material that has been treated. On the contrary, if the amount of mannan powder in the water solution exceeds 20%, the viscosity of the solution becomes too high to enable effective kneading of the materials, with resulting lowering of the productivity. The mannan content of 2.5% to 12% is suitable and therefore is preferred.

A suitable amount of starch may be added to the water solution of mannan. The amount of starch to be added is 50% to 250% of the weight of mannan.

The addition of starch is advantageous and economical in that it helps not only improve the ability of the mannan gel to retain water-soluble seasoning agents such as monosodium glutamate or extracted seasoning agents but also properly control releasing of water from the gel thereby to increase the yield.

With too much starch added, however, the modified mannan gel will not have a proper strength so that the final product may not have a texture to give a particular oral sensation similar to that of real meat of macrura such as lobster, and sometimes even the taste of the product will be seriously impaired.

To cause the water solution of mannan to gel, a water suspension or solution of calcium hydroxide, sodium carbonate, or any other suitable compound is added as a gelation accelerator to the water solution of mannan, which is stirred well and then held stationary for gelation. When calcium hydroxide is used, for example, a water solution of mannan is prepared, to which a water solution of calcium hydroxide is added, and by adjusting the pH of the mixture to about 10.5 it is possible to produce mannan gel with the highest efficiency.

The mannan gel obtained in the above manner is then frozen, formed into flakes and defrosted for modification. If the gel is shaped by cutting into a plate-like mass having a thickness of 1.5 cm to 3 cm, it is possible to shorten the time required for freezing.

For freezing the mannan gel may be cut and shaped into a plate-like mass having a thickness of 1.5 cm to 3 cm. Alternatively, the above-mentioned water solution of mannan may be put into a shallow cylindrical mold or applied onto a metal plate for gelation.

The above plate-like mass of mannan gel is placed in a freezer and kept therein at −20°C to −30°C for about 3 to 16 hours, whereupon the gel is frozen. Alternatively, the plate-like mass shaped by cutting, or the gel in the cylindrical mold or on the metal plate may be passed through a tunnel, in which liquid nitrogen is sprayed onto the gel for 2 to 5 minutes so as to rapidly freeze the surface of the gel. After the preliminary freezing the gel is put in a freezer and kept at −20°C to −30°C for 30 minutes to 12 hours, whereupon the mannan gel becomes frozen.

The frozen mannan gel obtained in the above manner is then formed into a film or tape having a width of 1.5 cm to 3 cm and having a thickness of less than 3 mm, preferably, 0.5 mm to less than 3 mm.

The method of applying the water solution of mannan onto a metal plate for gelation and subsequent freezing of the applied layer of the solution is advantageous in that the frozen gel obtained has a thickness suitable for a film or tape of mannan gel.

The disk-like mass of mannan gel obtained by using the above-mentioned cylindrical mold has the advantage that a film or tape of mannan gel can be continuously cut from the mannan gel disk by applying a cutting blade to the periphery of the mannan gel disk and gradually moving the blade toward the center thereof as the cylindrical mold is rotated about its axis.

To obtain a product simulating lobster meat, a tape of mannan gel which is 1 mm to less than 3 mm thick and 1.5 cm to 3 cm wide is cut into flakes of 2 cm to 5 cm in length.

To obtain a product simulating the meat of spring lobsters which is a little softer or has a little smaller resistance to mastication, the flakes of mannan gel preferably have a thickness on the order of 0.5 mm to 1.5 mm.

The flakes of frozen mannan gel are placed in a stream of water to defrost them and at the same time cause the gelation accelerator remaining therein to be eluted therefrom thereby to remove the smell of calcium, and then put into a centrifuge for dehydration.

Each of the flakes of modified mannan gel obtained in the above-mentioned manner comprises a flexible translucent white piece having filmy portions intertwined or intermingled with reticulate portions.

As a production test 1 kg of a water solution containing 3% of mannan was processed in the above-mentioned manner, and flakes of modified mannan gel weighing 200 g after dehydration were obtained.

Three lots of 1 kg of a water solution containing 3% of mannan and 3%, 5% and 7% of corn starch, respectively, were treated in the above-mentioned manner to obtain 420 g, 560 g, and 700 g of flakes of modified mannan gel, respectively. These products are slightly different from each other in flexibility and resistance to mastication depending upon the amount of starch added.

To obtain fish meat paste, any known method of producing "kamaboko" may be employed. The "kamaboko" is a traditional Japanese food which is a kind of molded fish meat paste. For example, 1 kg of "surimi" of high-grade fish meat is mixed with 0.3 kg of ice water and 25 g of common salt. The mixture is well kneaded while adding 10 g of a seasoning agent, 60 g of starch and 1 (one) g of a texturing agent to obtain a mass of fish meat paste. In order to regulate the flexibility of the final product, the kind of fish from which "surimi" is obtained and/or the amount of "surimi" may be changed. On the other hand, to adjust the jelly strength of the mannan gel any method known in the art such as changing the amount of starch to be added may be employed.

The mixing ratio of the fish meat paste and the flakes of modified mannan gel is a critical factor for determining the oral sensation which the final product will give, that is, the oral sensation similar to that experienced when real meat of macrura such as lobster is eaten.

The mixing ratio is 1 (one) part by weight of the fish meat paste and 0.3 to 2 parts by weight of the flakes of modified mannan gel. The materials are mixed and kneaded sufficiently so that the paste enters the reticulate structure of the mannan gel. If the flakes of modified mannan gel are added in an amount less than 0.3 part by weight, the final product is not entirely satisfactory although it may partially have a texture similar to that of real meat of macrura such as lobster. On the contrary, if the amount of the flakes added exceeds 2 parts by weight, the flakes are bound so loosely in the final product that when eaten they are easily separated in the mouth and cannot give an oral sensation similar to that experienced when real meat of macrura such as lobster is eaten.

The kneaded mixture of the fish meat paste and the flakes of modified mannan gel is then coagulated by applying heat thereto to obtain a final product. The heating may be conducted at a temperature required for thermal denaturation of the proteins of the fish meat and gelatinization of the starch. A shaped mass of the kneaded material having a thickness of about 3 cm may be steamed at 80°C to 100°C for 25 minutes to 45 minutes. The final product obtained in the above-mentioned manner comprises an integral mass of fish meat paste and thin flakes of modified mannan gel irregularly lying in many layers intermingled with the paste, so that the product has a texture as if there were two different kinds of muscular tissues having different degrees of resistance to mastication, and the texture gives an oral sensation similar to that experienced when real meat of macrura such as lobster is eaten.

The invention will be described further by way of the following examples.

Example 1

30 g of mannan powder is put into 970 g of hot water at 40°C and stirred for two hours, after which the mixture is held stationary for 16 hours to obtain a viscous water solution of mannan. 5 g of calcium hydroxide is dissolved in 50 ml of water, and the solution is added to the water solution of mannan. The mixture is stirred sufficiently and then put in a container of a conventional ice cutting machine, and the container is placed in a freezer and kept at −20°C for 16 hours so as to freeze the mannan component of the mixture.

The frozen mass of mannan gel is then taken out of the container and sliced by the ice cutting machine into flakes 2 cm to 3 cm wide and 1 mm to 2 mm thick. The flakes are then put in a stream of water so that they are defrosted and at the same time the excess calcium is eluted from the flakes. The flakes are then put in a centrifuge for dehydration. The yield is 200 g of flakes of modified mannan gel.

The flakes thus obtained are divided into four equal parts each weighing 50 g, to which 25 g, 50 g, 75 g and 100 g of the above-mentioned fish meat paste are added. After full kneading, each mixture is put in a plastic container to a thickness of 2 cm and steamed at 90°C to 100°C for 30 minutes to obtain a product of fish meat paste resembling real lobster meat.

Example 2

50 g of mannan powder is put in 950 g of hot water and processed in the same manner as in Example 1 so that a water solution containing 5% of mannan is obtained. Four samples each weighing 200 g are taken from the solution, and 6 g, 10 g, 14 g and 20 g of corn starch are added to the four samples, respectively. The samples are treated in substantially the same manner as in Example 1 to obtain flakes of modified mannan gel, which look like real lobster meat although they are a little less transparent than the flakes obtained in Example 1.

50 g of the flakes obtained in the above-mentioned manner is added to 100 g, 95 g, 50 g and 25 g of fish meat paste, respectively. After kneading, each lot is put in a plastic container and steamed at 90°C to 100°C for 40 minutes to obtain a product resembling real lobster meat.

Sensory tests have been conducted on the products obtained in Examples 1 and 2. The results of the tests indicate that the product containing 25 g of the fish meat paste has a texture very similar to that of real spiny lobster meat and the product containing 75 g of the fish meat paste has a texture very similar to that of real lobster meat.

With several persons who like lobster meat as panelists, further sensory tests have been conducted on the above-mentioned products containing 25 g and 75 g of the fish meat paste in comparison with real lobster meat. It has been found out that the products of the invention and cooked real lobster meat are so similar in taste and texture that when eaten on different days the products of the process of the invention can hardly be distinguished from real lobster meat.

**Claims**

1. A process for preparing an edible product simulating the meat of macrura such as lobster, characterized by the following steps:

a) preparing a predetermined amount of fish meat paste made by preparing "surimi" of fish meat, and mixing said "surimi" with at least one additive selected from salt, seasoning agents, starch and texturing agents;

b) preparing a predetermined amount of flakes of mannan gel which has been modified by freezing and defrosting so as to have a reduced hydrophilicity, said flakes being less than 3 mm in thickness;

c) mixing 1 (one) part by weight of said fish meat paste and 0.2 to 2 parts by weight of said flakes;

d) kneading said mixture of fish meat paste and flakes; and

e) coagulating said kneaded mixture by applying heat thereto.

2. The process of claim 1, further including the step of shaping said kneaded mixture into pieces of predetermined shape and size before aid coagulating step.

3. The process of claim 2, further including the step of colouring the surface of said pieces.

4. The process of claim 1, further including the step of shaping said coagulated mass into pieces of predetermined shape and size.

5. The process of claim 4, further including the step of colouring the surface of said pieces.

6. The process according to claims 2 and 3 or claims 4 and 5, wherein said pieces are solid pieces shaped and coloured like a lobster.

7. The process of claim 1, wherein said step of preparing flakes of modified mannan gel comprises:

preparing a water solution of mannan, the amount of mannan being 0.5 to 20%, preferably, 2.5 to 12%;

causing said solution to be transformed into a mass of gel;

freezing said mass at −20°C to −30°C;

making flakes from said frozen mass, said flakes being less than 3 mm in thickness; and

rinsing said flakes with water for defrosting.

8. The process of claim 7, wherein said water solution of mannan further includes starch in an amount of 50% to 250% by weight of mannan.

9. The process of claim 1, wherein said step of preparing flakes of modified mannan gel comprises:

preparing a water solution of mannan, the amount of mannan being 0.5 to 20%, preferably, 2.5 to 12%;

applying said solution onto the upper surface of a supporting member to form thereon a layer of mannan gel;

applying liquid nitrogen to the surface of said layer for 2 to 5 min for preliminarily freezing the surface portion of said layer;

placing said layer in a freezer for 0.5 to 12 h to freeze the mannan component of said layer;

cutting said frozen layer into flakes 1.5 to 3 cm wide, 2 to 5 cm long and 1 mm to less than 3 mm, preferably, 0.5 to 1.5 mm, thick; and

rinsing said flakes with water for defrosting.

10. The process according to any of the preceding claims, wherein said fish meat paste includes ingredients to give said paste a taste and/or smell similar to those of the meat of macrura such as lobster.

11. The process according to any one of the preceding claims, wherein said flakes comprise filmy portions and reticulate portions intermingled therewith.

## Patentansprüche

1. Verfahren zur Herstellung eines eßbaren Erzeugnisses, das dem Fleisch von Langschwanzkrebsen (Macrura) wie z.B. Hummerfleisch ähnlich ist, gekennzeichnet durch die folgenden Schritte:

a) Herstellen einer festgelegten Menge von Fischfleischpaste, die erzeugt wird, indem aus Fischfleisch "Surimi" hergestellt wird und das "Surimi" mit wenigstens einem aus Salz, Würzmitteln, Stärke und Texturiermitteln ausgewählten Zusatzstoff vermischt wird,

b) Herstellen einer festgelegten Menge von Flocken aus Mannan-Gel, das durch Einfrieren und Auftauen, modifiziert worden ist, damit es in vermindertem Maße hydrophiles Verhalten zeigt, wobei die Flocken eine Dicke von weniger als 3 mm haben,

c) Vermischen von 1 (einem) Masseteil der Fischfleischpaste und 0,2 bis 2 Masseteilen der Flocken,

d) Kneten der Mischung aus Fischfleischpaste und Flocken und

e) Koagulieren der gekneteten Mischung, indem ihr Wärme zugeführt wird.

2. Verfahren nach Anspruch 1, das ferner einen Schritt umfaßt, bei dem aus der gekneteten Mischung vor dem Schritt des Koagulierens Stücke mit einer festgelegten Gestalt und Größe geformt werden.

3. Verfahren nach Anspruch 2, das ferner einen Schritt umfaßt, bei dem die Oberfläche der Stücke angefärbt wird.

4. Verfahren nach Anspruch 1, das ferner einen Schritt umfaßt, bei dem aus der koagulierten Masse Stücke mit einer festgelegten Gestalt und Größe geformt werden.

5. Verfahren nach Anspruch 4, das ferner einen Schritt umfaßt, bei dem die Oberfläche der Stücke angefärbt wird.

6. Verfahren nach Ansprüchen 2 und 3 oder nach Ansprüchen 4 und 5, bei dem die Stücke feste Stücke sind, die wie Hummerfleisch geformt und gefärbt sind.

7. Verfahren nach Anspruch 1, bei dem der Schritt des Herstellens von Flocken aus modifizertem Mannan-Gel darin besteht, daß

eine wäßrige Lösung von Mannan hergestellt wird, wobei die Mannanmenge 0,5 bis 20% und vorzugsweise 2,5 bis 12% beträgt,

eine Umwandlung der Lösung in eine Gelmasse bzw. Gallerte bewirkt wird,

die Masse bei −20 bis −30°C eingefroren wird,

aus der eingefrorenen Masse Flocken hergestellt werden, wobei die Flocken eine Dicke von weniger als 3 mm haben, und

die Flocken zum Auftauen mit Wasser gespült werden.

8. Verfahren nach Anspruch 7, bei dem die wäßrige Lösung von Mannan ferner Stärke in einer auf das Mannan bezogenen Menge von 50 bis 250 Masse% enthält.

9. Verfahren nach Anspruch 1, bei dem der Schritt des Herstellens von Flocken aus modifiziertem Mannan-Gel darin besteht, daß

eine wäßrige Lösung von Mannan hergestellt wird, wobei die Mannanmenge 0,5 bis 20% und vorzugsweise 2,5 bis 12% beträgt,

die Lösung auf die obere Oberfläche eines Trägerteils aufgebracht wird, um darauf eine Schicht aus Mannan-Gel zu bilden,

auf die Oberfläche der Schicht zum Voreinfrieren des Oberflächenbereichs der Schicht 2 bis 5 min lang flüssiger Stickstoff aufgebracht wird,

die Schicht zum Einfrieren des Mannan-Bestandteils der Schicht 0,5 bis 12 h lang in einer Tiefkühltruhe bzw. Gefriervorrichtung untergebracht wird,

aus der eingefrorenen Schicht Flocken mit einer Breite von 1,5 bis 3 cm, einer Länge von 2 bis 5 cm und einer Dicke von 1 mm bis weniger als 3 mm und vorzugsweise 0,5 bis 1,5 mm geschnitten werden und

die Flocken zum Auftauen mit Wasser gespült werden.

10. Verfharen nach einem der vorhergehenden Ansprüche, bei dem die Fischfleischpaste Zutaten enthält, die der Paste einen Geschmack und/oder Geruch verleihen, der dem Geschmack und/oder Geruch des Fleisches von Langschwanzkrebsen wie z.B. Hummerfleisch ähnlich ist.

11. Verfahren nach einem der vorhergehenden Ansprüche, bei dem die Flocken häutige Anteile und damit vermischte bzw. verflochtene netzartige Anteile enthalten.

## Revendications

1. Procédé de préparation d'un produit comestible imitant la chair des macroures, tels que le homard, caractérisé par les étapes suivantes:

(a) la préparation d'une quantité prédéterminée de pâte de chair de poisson, obtenue en préparant un "surimi" de chair de poisson et en mélangeant ce "surimi" avec au moins un additif choisi parmi le sel, les agents d'assaisonnement, l'amidon et les agents de texturation;

(b) la préparation d'une quantité prédéterminée de paillettes de gel de mannane qui a été modifié par congélation et décongélation de manière à avoir un caractère hydrophile réduit, ces paillettes étant d'une épaisseur de moins de 3 mm;

(c) le mélange de 1 (une) partie en poids de cette pâte de chair de poisson et de 0,2 à 2 parties en poids de ces paillettes;

(d) le pétrissage de ce mélange de pâte de chair de poisson et de paillettes; et

(e) la coagulation de ce mélange pétri en y appliquant de la chaleur.

2. Procédé suivant la revendication 1, caractérisé en ce qu'il comprend en outre la phase de façonnage du mélange pétri en pièces d'une forme et d'une taille prédéterminées avant l'étape de coagulation.

3. Procédé suivant la revendication 2, caractérisé en ce qu'il comprend en outre la phase de coloration de la surface de ces pièces.

4. Procédé suivant la revendication 1, caractérisé en ce qu'il comprend en outre la phase de conformation de la masse coagulée susdite en pièces d'une forme et d'une taille prédéterminées.

5. Procédé suivant la revendication 4, caractérisé en ce qu'il comprend en outre la phase de coloration de la surface de ces pièces.

6. Procédé suivant les revendications 2 et 3 ou les revendications 4 et 5, caractérisé en ce que les pièces susdites sont des pièces solides conformées et colorées à la manière d'un homard.

7. Procédé suivant la revendication 1, caractérisé en ce que la phase de préparation des paillettes du gel de mannane modifié comprend:

—la préparation d'une solution aqueuse de mannane, la quantité de mannane étant de 0,5 à 20%, de préférence de 2,5 à 12%;

—la transformation de cette solution en une masse de gel;

—la congélation de cette masse à une température de −20 à −30°C;

—la fabrication de paillettes au départ de cette masse congelée, ces paillettes étant d'une épaisseur de moins de 3 mm; et

—le rinçage de ces paillettes à l'eau pour la décongélation.

8. Procédé suivant la revendication 7, caractérisé en ce que la solution aqueuse de mannane comprend en outre de l'amidon en une quantité de 50 à 250% en poids du mannane.

9. Procédé suivant la revendication 1, caractérisé en ce que la phase de préparation de paillettes d'un gel de mannane modifié comprend:

—la préparation d'une solution aqueuse de mannane, la quantité de mannane étant comprise entre 0,5 et 20%, de préférence entre 2,5 et 12%;

—l'application de cette solution à la surface supérieure d'un élément de support pour y former une couche de gel de mannane;

—l'application d'azote liquide à la surface de cette couche pendant 2 à 5 minutes pour assurer une congélation préliminaire de la portion superficielle de cette couche;

—la mise en place de cette couche au réfrigérateur pendant 0,5 à 12 heures pour congeler le composant de mannane de cette couche;

—le découpage de cette couche congelée en paillettes d'une largeur de 1,5 à 3 cm, d'une longueur de 2 à 5 cm et d'une épaisseur de 1 mm à moins de 3 mm, de préférence de 0,5 à 1,5 mm; et

—le rinçage de ces paillettes à l'eau pour la décongélation.

10. Procédé suivant l'une quelconque des revendications précédentes, caractérisé en ce que la pâte de chair de poisson susdite comprend des ingrédients pour donner à cette pâte un goût et/ou un fumet semblables à ceux de la chair des macrouses, tels que le homard.

11. Procédé suivant l'une quelconque des revendications précédentes, caractérisé en ce que les paillettes comportent des portions en forme de pellicule et des portions réticulées entremêlées avec les précédentes.